# EUROPEAN PATENT APPLICATION

(11) **EP 1 649 794 A2**
(43) Date of publication of application: **26.04.2006**
(21) Application number: 05109394.6
(22) Date of filing: 10.10.2005
(51) Int. Cl.: A47J 37/12

(54) **Built-in cooking appliance**

(30) Priority: 20.10.2004 IT TO20040726
(71) Applicant: Indesit Company S.p.A., 60044 Fabriano (AN) (IT)
(72) Inventor: Chapelier, Jean Claude, 57240 Knutange (FR); Antonini, Luciano, 62032 Camerino (MC) (IT); Crinquant, Yves, 57570 Cattenom (FR); Roge, Philippe, 57100 Thionville (FR)
(74) Representative: Dini, Roberto

(57) **Abstract**

Built-in cooking appliance, comprising a main body (2) being configured and structured in such a way as to be adapted to rest stably on the edges of a recess of a cabinet (3), and comprising a tub (4) which defines, with its capacity, a cooking volume for food to be cooked, first heat generating means (7,8,SC;23) being associated with said tub (4) for heating said tub (4), and second means (SC) being associated with said first means (7,8,SC;23) for controlling the thermal power supplied by said first means (7,8,SC;23) to said tub (4).

According to the invention, the first means comprise a plurality of heating elements (7,8; 23) being associated with distinct areas (4A,4B) of said tub (4), said second means controlling the thermal power supplied by said heating elements to said areas (4A,4B).

## Description

The present inventions relates to a built-in cooking appliance according to the preamble of claim 1. In particular, the present invention relates to an appliance adapted to be built-in into suitable compartments of kitchen cabinets, which compartments are closed on top by the same appliance, which generally rests on their edges.

In this technical field, an appliance of this type is also called "built-in domino" or simply "domino"; therefore, in the following the term "domino" will identify such a typology of appliance.

At present dominoes are known whose architecture is suitable for a single cooking typology, sometimes with several cooking points, typically two, or combining several heat sources into the same cooking area. In brief, we can distinguish the following typologies of dominoes:
- grill domino, heating elements of which may be simple electric resistances or gas burners or irradiation plates, and heating elements of which are essentially located at the same height of the top of the cabinet wherein the domino is built-in;
- barbecue domino, comprising a single cooking point consisting of a container wherein the charcoal to be burned is laid; sometimes there is also an electric resistance, being typically located at a certain height inside the volume provided for housing the charcoal;
- frying domino, comprising a container being heated by an associated resistance containing oil, which is kept at a preset temperature by suitable means;
- bain-marie domino, comprising a heated container which, together with dedicated accessories, is adapted to carry out this particular cooking method.

These known built-in cooking appliances have the drawback of being able to perform only one typology of cooking, i.e. they are designed for and have a construction architecture adapted to only one specific cooking. When not in use, such appliances take up room in the kitchen without offering any practical utility, and they even cannot even be often used as a surface for laying other objects, as they lack a top adapted to this purpose.

Therefore they provide poor flexibility of use in the kitchens wherein they are integrated and installed. This drawback is particularly felt in environments where available room and surfaces are limited, such as the kitchenettes or kitchens of many apartments.

Known dominoes also have an architecture being substantially integrated into their main body, i.e. an architecture which cannot be easily disassembled from the main body. Accessing and cleaning the internal parts are often difficult operations which cannot be carried out directly from the outside.

It follows that it is often difficult to reach some internal parts of known appliances, so that any necessary cleaning or repairs of the same cannot be done easily and require the intervention of a qualified technician.

The present invention aims at providing a built-in cooking appliance having improved features and performance compared to the known solutions.

In this frame, the main object of the present invention is to provide a built-in cooking appliance having improved flexibility of use, in particular allowing to carry out several types of cooking simultaneously.

Another object is to be able to utilize very well both the built-in volume and the flat surfaces being available in the kitchens wherein the built-in cooking appliance is installed, i.e. built-in.

Another object of the present invention is to allow for automatic food cookings as well, i.e. without a user having to control the cooking continuously and directly.

Another object is to carry out cookings with the utmost care for the hygiene and cleanliness of the environment wherein the appliance is installed.

Another object is that the built-in cooking appliance according to the invention is particularly adapted to filter smells given off by the food being cooked.

Another object of the appliance according to the present invention is to be able to display and/or transfer a multiplicity of information to a user.

Another object of the invention consists in providing accessories and tools adapted to facilitate the correct cooking of the food and a rational utilization of the volumes taken up by the same built-in cooking appliance.

In order to achieve such objects, the present invention provides a built-in cooking appliance or domino incorporating the features of the annexed claims, which form an integral part of the present description.

Further objects, features and advantages of the present invention will become apparent from the following detailed description and annexed drawings, which are supplied by way of non-limiting example, wherein:
- Fig. 1 shows a perspective view of a built-in cooking appliance or domino according to the present invention in a configuration of utilization;
- Fig. 2 shows a schematic view according to section A-A of the appliance of Fig. 1, which is built-in inside a recess of a cabinet;
- Fig. 3 shows a schematic representation of an example of a control system of a domino according to the present invention.
- Fig. 4 shows a perspective view of a different configuration of a domino according to the present invention;
- Fig. 5 shows a schematic view according to section A-A of the different configuration of domino of Fig. 4;
- Fig. 6 shows a perspective view of a detail of the different configuration of Fig. 4;
- Figs. 7 and 8 show schematic longitudinal-section views of two possible configurations of a detail of a domino according to the present invention.

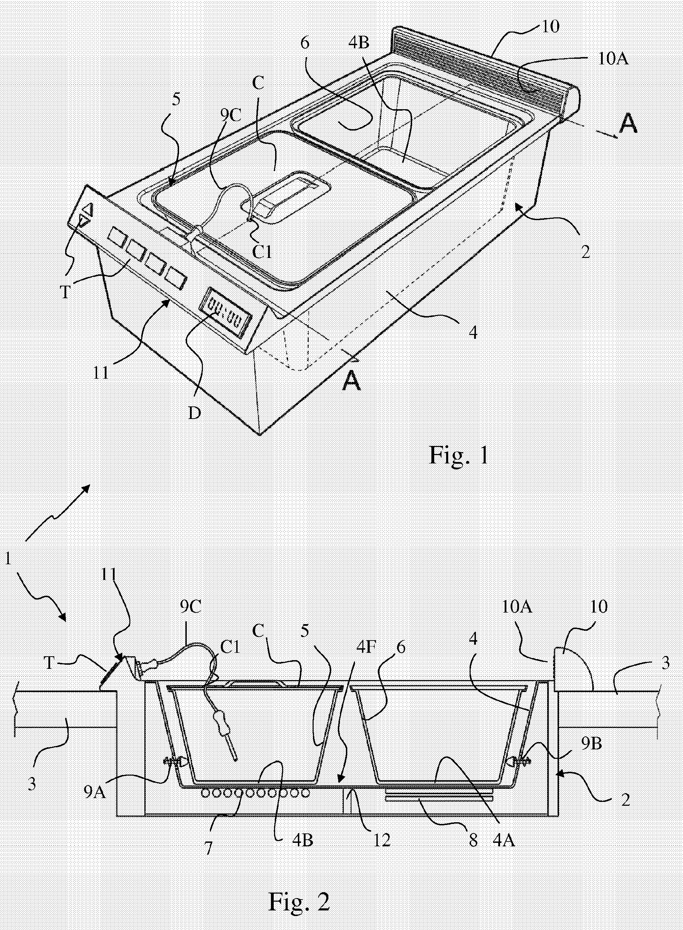

Figs. 1 and 2 show a built-in cooking appliance, i.e. a domino, indicated as a whole with 1, in a configuration of utilization. In such a configuration, it is particularly adapted to carry out the cooking of meat, with a continuous monitoring of its internal temperature through a so-called "meat-skewer" probe, as well as a second cooking such as traditional in-pot cooking, bain-marie cooking or frying.

The domino 1 consists of a main body 2 being configured and structured in such a way as to be adapted to rest stably on the edges of a recess of a cabinet, indicated as a whole with reference number 3 in Fig. 2. Said main body 2 defines a volume being dedicated to the cooking of food, which volume is substantially defined by the lower dimensions of the same body 2 and is located inside the cabinet once the domino 1 has been installed, i.e. laid on the edges of the recess 3.

The main body 2 has a tub 4 having a certain height, i.e. depth, which is comprised below said edges. With its inner capacity, said tub 4 defines the actual cooking volume being used for cooking food.

It has a flat bottom adapted to be a surface for laying one or more cooking containers.

In the illustrated example, the containers are a pair of pots, indicated with reference numbers 5 and 6 identifying a first pot and a second pot, respectively. Said pots 5 and 6 may be of a known type adapted for a traditional cooking, fitted or not with lids, or of a typology being dedicated to a specific cooking, such as bain-marie cooking, frying, or pressure cooking or steam cooking, the pot/lid assembly representing a pressure cooker or a pot adapted for steam cookings of a known type; or else being a container for housing charcoal, so as to create a barbecue module.

In the example of Figs. 1-2, the first pot 5 is laid on a first cooking area 4A belonging to the flat bottom F of the tub 4, and has a shape being conjugated to that which defines the front volume of the tub 4. A lid C is laid on top of it, which has a passage C1 for positioning a useful accessory, in this case a "meat-skewer" probe 9C, inside the first pot 5, so that the cooking can take place with the lid C on top of the pot.

The second pot 6 is laid on a second area 4B of the flat bottom F of the tub 4, and has a shape being conjugated to that which defines the rear volume of the tub 4. It is adapted for traditional cookings as well as for bain-marie cooking or frying, as long as it is provided with appropriate dedicated accessories, not shown for simplicity's sake.

The shape of the pots 5 and 6 is conjugated to that of the tub 4, occupying most of its volume when both pots are laid on the flat bottom 4F. In this way, the domino 1 provides an optimum utilization of the volumes of the tub 4 in order to carry out a plurality of cookings simultaneously, in particular being of different typologies, thereby offering high flexibility of use of the domino 1. In fact, the pots 5 and 6 have such shapes and dimensions as to be suitably and advantageously integrated together into the main body 2, i.e. in the inner volume of the recess 3 of the cabinet in which the domino 1 is to be housed.

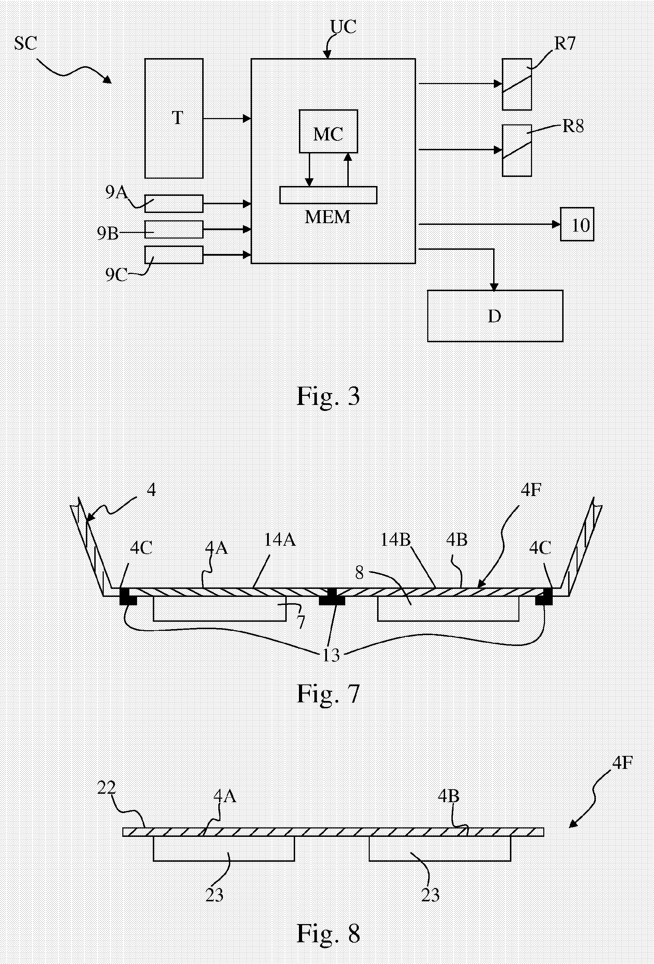

The domino 1 therefore has the following components associated with its main body 2:
a) a heating element 7, which may for instance be an electric resistance, a plate for pyroceram tops or an induction element, being associated with the first area 4A of the flat bottom F so that the heat generated by the heating element 7 can be transmitted to the first area 4A;
b) an additional heating element 8, e.g. of the above-described type, adapted to transmit heat to the second area 4B of the flat bottom F through known association means, which will not be detailed any further for simplicity's sake;
c) a control panel 11 for handling the functions implemented by the same domino 1 and detailed further on, located at a longitudinal end of the main body 2, i.e. on the front side of the tub 4, so as to be easily accessible to a user;
d) a control system of the domino 1, indicated as a whole with SC in Fig. 3, which incorporates means for controlling the power supplied by the heating element 7 and by the additional element 8 to the tub 4, in particular being of a typology also allowing a user to adjust the power of the heating elements 7 and 8;
e) a pair of temperature sensors, indicated with 9A and 9B, for detecting the values of the temperature being present in distinct points of the tub 4;
f) the "meat-skewer" probe 9C, used for detecting the temperature being present inside the food being cooked, in particular meat, and being movably associated with an output of the control panel 11, e.g. through a simple plug, for transferring the measured values to the control system SC;
g) a hood 10 for aspirating and filtering the fumes and vapours generated during the cooking, being located on the edge of the main body 2 at the rear longitudinal end of the tub 4, i.e. on the side being opposite to that of the control panel 11.

The suction hood 10 is structured in such a way as to have a suction grid 10A running along the rear side of the tub 4 and being perpendicular to the top of the domino 1.

Advantageously, the presence and activation of the hood 10 during the operation of the domino 1 allows to immediate aspiration and filtration of the fumes generated in the cooking pots 5 and 6, especially those of the second pot 6, thereby contributing to keep the environment in which the domino 1 is used in the ideal hygienic conditions, i.e. without the typical smells and/or vapours produced by cooked food.

The main body 2 is also characterized by the presence of thermal insulation means, indicated as a whole with 12, being located close and/or in contact with the flat bottom 4F of the tub 4 in such a way as to slow down the heat exchange between the first area 4A and the second area 4B of the same flat bottom 4F.

Such means, which for simplicity's sake will not be detailed any further, may for example be simple dividing elements made of an insulating material or within which there is circulation of air, being so positioned as to divide the volumes under the two areas 4A and 4B and being fixedly or movably constrained to the main body.

The temperature sensors 9A and 9B are associated, on opposite sides, with the lengthwise farthest walls of the tub 4 and protrude inside the latter in contact with the containers 5 and 6, the first sensor 9A with a corresponding wall of the first pot 5 and the second sensor 9B with a wall of the second pot 6, respectively.

The pair of sensors 9A and 9B are internally constrained to suitable through seats obtained in the walls of the tub 4, so that they can slide longitudinally outward from within the tub 4 and vice versa as well as adhere to said pots 5 or 6. For example, each sensor 9A, 9B may have a stem-shaped body sliding in a respective dedicated seat of the tub 4, ending with a thermosensitive element adapted to detect the temperature of the walls of the pots 5,6 and having a rounded shape facilitating the contact with the single pot 5 or 6, and whose motion is opposed by a resilient element that leads it to assume a normally extracted operating position when it is not adhering to the single pot 5 or 6. Such details concerning the sensor and its constraints will not be described or detailed any further for simplicity's sake.

The tub 4 is shaped in such a way that the pots 5 and 6 can be laid simultaneously on the flat bottom 4F of the tub 4, in the first area 4A and in the second area 4B, respectively, as shown in Figs. 1 and 2. The shape of these pots, which is substantially conjugated to that of the tub 4, advantageously allows for a rational and optimal utilization of the cooking volume, which volume is substantially identified by the tub 4. A double cooking may be carried out inside the domino 1, in a completely separate and independent manner, in the two distinct areas 4A and 4B being present on the flat bottom 4F of the tub 4, thereby achieving actual flexibility of use.

Said flexibility is confirmed by the fact that the two areas 4A and 4B, as detailed later, can be controlled in a wholly autonomous and distinct way during the cooking operation; at the same time, they may also be conveniently used for laying any objects or food to be simply warmed up. In fact, the presence of a certain thermal insulation provided by said prearranged thermal insulation means 12 allows for a quite independent adjustment of the temperatures of the first area 4A and of the second area 4B.

Hereafter special reference will be made to the annexed Figure 3, which shows a possible schematic configuration of the control system SC of the domino 1 according to the present invention.

The control system SC comprises:
i. an electronic control unit, designated as a whole UC, for handling a plurality of input/output functions and information;
ii. means for generating input signals for said control unit UC, consisting of the sensors 9A and 9B and of the probe 9C, as well as of a keyboard T or any technical means adapted to allow a user to transfer inputs and/or information to the control system SC;
iii. output elements for said control unit UC, consisting of:
   - relay devices or rheostats R7 and R8, or any other power device being able to transform electric signals coming from the control unit UC into electric power applied to the first heating element 7 and to the second heating element 8, respectively;
   - the hood 10, which is of a type adapted to receive from the control unit UC appropriate on/off signals or signals for selecting a certain suction speed;
   - a graphic display D with LCD or OLED technology, or any other monitor or means capable of communicating information coming from the control unit UC to the user of the domino 1.

The electronic control unit UC typically comprises a microcontroller or microprocessor MC capable of processing the input signals received from said input means 9A, 9B, 9C, T through one or more programs stored in prearranged memory means MEM included in the same control unit UC.

Such programs, depending on the functions set by the user through the keyboard T and possibly on the temperature values detected by the sensors 9A and 9B and by the probe 9C, determine output values which are sent to the associated devices. In particular, said output values adjust the power devices R7 and R8 in a typically independent manner, the operation of the hood 10 and of any other accessories, as well as the information that must appear on the display D.

The keyboard T comprises keys operating according to the so-called "Touch Control" technology, i.e. adapted to create a control device according to the teachings contained in the French Patent FR 2 777 635 in the name of the present Applicant. Said teachings are to be cosidered as being integrally incorporated in the present document, and thus form part of the present description.

The keyboard T may also be of a type operating through infrared rays or through piezoelectric actuators.

The power device capable of heating the areas 4A and 4B incorporates relays R7 and R8 adapted to control and adjust the caloric power depending on the time they remain in ON mode, during which current is supplied to the heat generating elements, i.e. to the first heating element 7 or to the second heating element 8, and on the time they remain in OFF mode, during which no current is supplied. In this way, the heating elements or heat generators 7 and 8 are at full power when the relays are always in ON mode, at null power when the relays are always in OFF mode, or at half power when the relays are for a certain time in ON mode and for the same subsequent time in OFF mode, i.e. when the ON and OFF modes alternate cyclically for the same time.

The temperature sensors 9A, 9B and the probe 9C preferably use an NTC sensor, i.e. a negative temperature coefficient thermistor, in order to detect the temperature in the tub 4, e.g. being of a type fitted with a platinum probe.

Many are the functions implemented and implementable by the above-described control system SC, and the operation of the domino 1 may vary depending on the information received and on the program selected by a user through the keyboard T.

The control system SC is in fact capable of implementing a type of operation which may be defined as "traditional", wherein the power devices R7 and R8 are controlled by a user directly, in real time and typically independently through dedicated controls of the keyboard T, as well as an automatic operation. According to this latter type of operation, a user, after having set the corresponding function, e.g. through a dedicated function key of the keyboard T, chooses a type of cooking or a recipe that he/she wants to cook. Such information is stored in a database contained in the memory means MEM and is made available to the central unit UC. The selected option implements a cooking of a certain type in the first area 4A and in the second area 4B; this means that the control unit UC keeps sending appropriate control signals to the power devices R7 and R8 so as to adjust the released caloric power according to the selected program. For the distribution of output information, said program may possibly use information received from the sensors 9A e/o 9B, which detect in real time the temperature of the first pot 5 and of the second pot 6, respectively, and/or from the "meat-skewer" probe 9C, if present (or from other accessories capable of detecting the temperature of the food being cooked).

In short, the user can choose whether to carry out an automatic cooking, wherein the selected program provides for supplying a preset quantity of heat to the food in the first area 4A and in the second area 4B, i.e. handles the cooking modes and the corresponding temperatures, or to carry out a traditional cooking by directly controlling the caloric power being supplied to the areas 4A and 4B.

When the automatic operation is selected, the domino 1 according to the present invention is thus advantageously able to, through the control system SC and the above-described input/output components (shown in Fig. 3 on the left and on the right of the control unit UC, respectively), automatically adjust the times and caloric power to be supplied to the heating elements 7 and 8 in the single areas 4A and 4B, and thus to the pots 5 and 6 resting on the same areas.

According to a further operation option which may be defined as semiautomatic, the control system SC may warn the user when the power devices of the domino should be turned off, through buzzers of a known type being integrated into the control system SC, in particular into the control panel 11, which will not be detailed any further for simplicity's sake; these buzzers may also signal the achievement of a certain desired cooking of the food, or the necessity of removing the pot from the area 4A o 4B.

In short, the domino 1 advantageously can, through the above-described control system SC, interact with the user by providing information through the display D and then receiving instructions about the management of the cooking elements 7 and 8 based on the selection made by the user through appropriate commands given through the keyboard T.

Furthermore, the user advantageously can enter and set a plurality of functions within the entire control system SC, such as e.g. a clock incorporating a timer or a recipe book for the assisted cooking of his/her preferred dishes, with automatic management of the heating elements 7 and 8, so as to carry out those types of cookings included in the selected recipe.

The inventive idea at the basis of the domino according to the present invention as well as its advantages are apparent from the above description and annexed drawings.

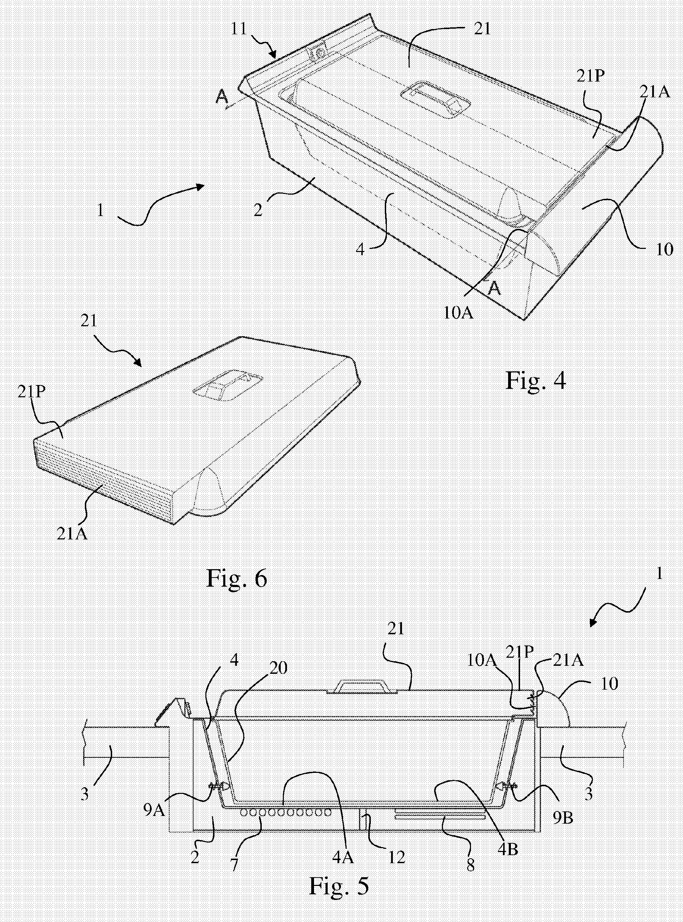

An aspect of the invention consists in teaching how to produce cooking appliances (or dominoes) wherein the cooking volume provided for being built-in inside a recess of a cabinet has a regular shape, thus being perfectly fitted for that purpose. Such a cooking volume, which essentially is identified by the volume of the tub 4 in the illustrated example, has a plurality of cooking areas 4A and 4B whose actuation is controlled separately, so that several as well as different cookings can be carried out simultaneously. Alternatively, the domino according to the present invention allows to implement a single cooking in distinct heating areas, as described later with reference to Figs. 4-6.

A second aspect of the invention consists in teaching how to produce a domino comprising or incorporating in the above-mentioned cooking volume cooking containers 5 and 6 being dedicated to specific cooking typologies, as well as incorporating heating elements 7 and 8 adapted to implement distinct cooking typologies in distinct points inside the same tub 4, i.e. the cooking volume provided for the food to be cooked.

The pots 5 and 6 may be of many types and be adapted to implement, once laid on the areas 4A and 4B of the flat bottom 4F, a plurality of distinct cookings, such as:
- in-pot cooking, by using a meat-skewer probe 9C passing through a dedicated lid C;
- steam or pressure cooking, by using a dedicated pot of a known type;
- bain-marie cooking, with the possibility of adjusting the water temperature continuously by using the temperature sensors 9A or 9B, managed by the control system SC;
- frying, through a appropriate frying pot and known dedicated accessories, with the possibility of adjusting the oil temperature as previously described;
- low-pressure or vacuum cooking, by using a particular dedicated pot the lid of which is associated or associable with an external pump for creating vacuum inside the pot.

Therefore, the cooking appliance or domino according to the present invention advantageously allows to carry out a plurality of cookings simultaneously and in the same volume, which is substantially identified by the shape and dimensions of the tub 4 adapted to house the pots 5 and 6 being dedicated to specific cookings; such pots being possibly fitted with suitable dedicated accessories.

The regular shape of the tub 4 advantageously allows to use the domino 1 also for laying down containers temporarily, thereby improving further its flexibility of use.

Advantageously, the control system SC also allows to carry out cookings in such a way that the user is assisted by the appliance 1 in controlling the temperature of the food being cooked (meat-skewer probe 9A) and the temperature of the walls of the containers 5 and 6, as well as to perform automatic or semiautomatic cookings, as described previously in the present description.

Figs. 4 and 5 show one of the possible configurations of the built-in cooking appliance or domino according to the present invention, which represents a different configuration to that shown in the example of Figs. 1-3 and in which the same references are used for homologous items.

In particular, it should be noted that the whole architecture of the main body 2 of the domino 1 remains unchanged, and therefore will not be detailed any further.

The above different configuration incorporates on the contrary a single pot, indicated with 20, having a shape being substantially conjugated to that of the tub 4 and laying on both the first cooking area 4A and the second cooking area 4B of the flat bottom 4F.

The single pot 20 is provided with a special lid, indicated with 21 and specifically shown in the perspective view of Fig. 6, adapted to rest on top or adhere to the same single pot 20. The lid 21 has a lengthwise protrusion 21P abutting on the vertical development of the suction grid 10A of the hood 10. The protrusion 21P has an exhaust area 21A for the fumes collected inside the lid 21, said area consisting in particular of a plurality of transversal openings at the same height. Said openings of the exhaust area 21A are shaped in such a way as to work as diffusers directing the fumes downward.

When the lid 21 is coupled to the single pot 20, its protrusion 21P abuts directly on the suction grid 10A, the shape of which advantageously allows to convey all fumes and vapours directly into the hood 10, so that they are completely filtered.

This particular lid 21, which clearly can be applied in the same way as the second pot 6 of the example of Figs. 1-3, advantageously allows to keep the environment where the domino 1 is located free from any fumes and vapours generated by the food being cooked, and therefore also from typical kitchen smells.

The use of the single pot 20 advantageously allows to provide a further possibility for cooking food, i.e. cooking in a single pot but with two distinct heat sources being present in the front portion (the first area 4A) and in the rear portion (the second area 4B) of the tub 4, in order to obtain a differentiated cooking of the food contained therein. Such a cooking advantageously takes place in a cooking volume which in this case is identified by the single pot 20 and which is perfectly integrated with the main body of the domino 1, thereby ensuring an optimal and rational utilization of the occupied volumes.

According to the invention, the cooking of food may also be carried out by positioning the food directly into the tub 4, thereby obtaining a cooking being similar to the one described above but characterized by a different diffusion of heat from the areas 4A and 4B, due to the absence of the single pot 20 in between. In this case, the particular lid 21 of Fig. 6 may be so shaped as to rest directly on the edges of the tub 4.

The built-in cooking appliance or domino according to the present invention, as described in the illustrated examples, may be subject to many further possible variations without departing from the novelty spirit of the inventive idea; it is also clear that in the practical realization of the invention the illustrated details may have different shapes or be replaced with other technically equivalent elements.

From a technical point of view, Figs. 7 and 8 schematically show the cross-section of two possible architectures of the flat bottom 4F of the tub 4 according to the present invention.

Fig. 7 shows the tub 4 with most of the surface making up the flat bottom 4F consisting of a plurality of flat elements 14A and 14B, in particular two, being separated from each other and inserted into a hole obtained centrally in the same tub 4; the hole is identified by the respective edges 4C. Said flat elements 14A and 14B are made of a metal, e.g. aluminum, and are associated with the heating means 7 and 8 so as to transfer the heat generated by the latter to the respective areas 4A and 4B of the flat bottom 4F. The flat elements 14A and 14B are also associated with each other and with the edges 4C of the central hole of the tub 4 through the interposition of frames or sealing elements, indicated as a whole with 13, made of a thermoinsulating material, e.g. teflon.

Said flat bottom 4F is assembled in such a way that the inner bottom of the tub 4 remains smooth and compact, through any known technique, not detailed herein for simplicity's sake, adapted to create a rigid structure which can also be easily disassembled from within the same tub 4 by a person in charge of the maintenance or cleaning of the domino.

The above-described different configuration of the flat bottom 4F of the tub 4 advantageously offers a very good reciprocal thermal insulation of the areas 4A and 4B, thereby helping to improve the versatility and functionality of the domino 1 according to the invention.

Moreover, the heat supplied by the heating means 7 and 8 is not substantially diffused to the whole tub 4 and thus further dissipated in the main body 2 and in the recess of the cabinet 3 with which the domino 1 is associated, thereby also saving thermal energy for food cooking.

Furthermore, the sectional flat dismountable bottom improves the accessibility of the internal parts of the main body 2, and allows for a thorough cleaning of the flat bottom 4F.

A different configuration of the sectional flat dismountable bottom 4F of Fig. 7 is shown in Fig. 8, wherein 22 indicates a pyroceram sheet substantially forming the same bottom 4F. Infrared-ray plates are associated with it in a known way, which are indicated with 23 and adapted to form means for heating the pyroceram sheet 22. As known, with this solution heat is transmitted to the cooking areas 4A and 4B in a direction being substantially orthogonal to the same sheet.

Advantageously, the pyroceram sheet 22 does not allow for a substantial transmission of heat in the development direction of the same sheet, i.e. the heat produced in the first area 4A tends to propagate with a certain inertia to the second area 4B and vice versa, whereas it is transmitted easily in the orthogonal direction. In short, such a solution allows to obtain the same advantages of different configuration of Fig. 7, but with a simpler construction and an improved compactness of the flat bottom 4F of the tub 4.

It is clear that many other changes are possible for the man skilled in the art to the built-in cooking appliance or domino according to the present invention without departing from the principles of the present invention.

For instance, according to an aspect of the invention, the heating means may be more than two in order to identify a plurality of cooking areas, which may supply heat in several points to a single container or to a plurality and variety of possible containers. Such areas may for example be three and be arranged either in line or according to an arrow pattern, or they may be four and occupy evenly the flat bottom of the tub of the domino.

Likewise, the tub of the domino and the associated pots may have many different shapes, provided that they comply with the inventive concept of determining a cooking volume being widely utilizable and versatile.

Many means may then be employed for heating the flat bottom 4F, with which they may also be associated in various ways, provided that they comply with the teachings of the known art and with the principles of the inventive idea; for instance, they may be gas burners, the domino being fitted with suitable ducts for combustible gas and air (or any other comburent) adapted to allow for flame ignition and adjustment, the power adjustment systems being of a type adapted to adjust the caloric power supplied by the burner.

The containers of the domino may also be associated with the tub in a multiplicity of cooking areas in any way adapted to allow heat to be transmitted to said pots; for example, through hooking elements located at the sides of the tub.

Many typologies of temperature sensors may be used as well. Said sensors may be constrained to the same tub 4 or to other structural components inside the main body 2, for the purpose of detecting the temperature being present in heated zones of the appliance according to the invention, as well as within the food being cooked.

## Claims

1. Built-in cooking appliance, comprising a main body (2) being configured and structured in such a way as to be adapted to rest stably on the edges of a recess of a cabinet (3), and comprising:
- a tub (4) which defines, with its capacity, a cooking volume for food to be cooked,
- first heat generating means (7,8,SC;23) being associated with said tub (4) for heating said tub (4),
- second means (SC) being associated with said first means (7,8,SC;23) for controlling the thermal power supplied by said first means (7,8,SC;23) to said tub (4);
**characterized in that** said first means comprise a plurality of heating elements (7,8; 23) being associated with distinct areas (4A,4B) of said tub (4), and that said second means control the thermal power supplied by said heating elements to said areas (4A,4B).

2. Cooking appliance according to claim 1, **characterized in that** said second means (SC) are adapted to activate and control said heating elements (7,8;23) in a reciprocally independent way.

3. Cooking appliance according to claim 1 or 2, **characterized in that** said heating means (7,8;23) are associated with a bottom (4F), in particular a flat bottom, of said tub (4).

4. Cooking appliance according to one of the previous claims, **characterized in that** said first means comprise heating elements of different types (7,8;23).

5. Cooking appliance according to one of the previous claims, **characterized in that** it comprises at least one container (5,6;20) having a shape being substantially conjugated to at least a portion of the shape of said tub (4).

6. Cooking appliance according to the previous claim, **characterized in that** said at least one container (5,6;20) can be associated with at least one of said distinct areas (4A,4B) of said tub (4), so that the heat can be transmitted from said at least one area (4A,4B) to said at least one container (5,6;20).

7. Cooking appliance according to claims 3 and 6, **characterized in that** said at least one container (5,6;20) rests on and is constrained to at least a portion of said bottom (4F), in at least one of said areas (4A,4B) of said tub (4).

8. Cooking appliance according to one of the previous claims, **characterized in that** it comprises a plurality of containers (5,6) which can be simultaneously associated with or laid on said distinct areas (4A,4B) of said tub (4), in particular a first pot (5) in a first area (4A) and a second pot (4B) in a second area (4B).

9. Cooking appliance according to one of the previous claims, **characterized in that** it comprises third means (SC) for handling and controlling the operation of the appliance (1), said third means substantially comprising said second means (SC).

10. Cooking appliance according to the previous claim, **characterized in that** said third means comprise a control system (SC) adapted to execute programs for controlling said appliance (1) automatically, i.e. for controlling the activation and supply of said heating elements (7,8;23) according to programs being present in said control system (SC) and being selectable by a user through appropriate selection means (T).

11. Cooking appliance according to the previous claim, **characterized in that** said control system (SC) is an electronic one and comprises:
- an electronic control unit (UC) for managing a plurality of input/output functions and information, in particular said functionalities being implemented by using suitable programs stored in memory means (MEM) and processed by a microprocessor (MC), both of which are included in said control unit (UC);
- fourth means (9A,9B,9C,T) for generating input signals for said control unit UC and comprising said selection means (T);
- output elements (R7, R8, 10, D) for said control unit (UC), comprising at least one power device (R7,R8) adapted to input the activation of said heating elements (7,8;20).

12. Cooking appliance according to the previous claim, **characterized in that** said fourth means comprise sensor means (9A,9B,9C) for detecting the temperature reached by components (5,6) of said domino (1) being subject to heating or by the food, the generated input signals being sent to the central unit (UC) for the implementation of the functionalities according to a program selected by the user.

13. Cooking appliance according to claims 8 and 12, **characterized in that** said sensor means comprise a first sensor (9A) being associated with said first pot (5) and a second sensor (9B) being associated with a second pot (6) for detecting the temperatures reached by specific walls of said containers (5,6).

14. Cooking appliance according to claim 12, **characterized in that** said sensor means comprise an element for detecting the internal temperature of the food (9C), in particular a meat-skewer probe.

15. Cooking appliance according to claim 11, **characterized in that** said output elements for said control unit (UC) comprise fifth means (D) being capable of communicating information coming from the control unit (UC) to a user of the domino (1), in particular a graphic display with LCD or OLED technology,

16. Cooking appliance according to claim 1 or 15, **characterized in that** it comprises a hood (10) being associated with the main body (2) of said domino (1) for aspirating and filtering the fumes and vapours generated during the cooking, in particular said hood (10) being part of said output elements for said control unit (UC).

17. Cooking appliance according to the previous claim, **characterized in that** said hood (10) is located on top of the edge of said main body (2), in particular adhering to said edge at the rear longitudinal end of said tub (4) and having a suction grid (10A) being perpendicular to the top of the domino (1).

18. Cooking appliance according to one of the previous claims, **characterized in that** it comprises a control panel (11) for handling the functions implemented by the domino (1), being located on the front side of the main body (2).

19. Cooking appliance according to claims 9 or 11 and 18, **characterized in that** said control panel (11) comprises said selection means (T), in particular a keyboard.

20. Cooking appliance according to the previous claim, **characterized in that** said selection means (T) comprise keys or control devices operating according to the "Touch Control" technology.

21. Cooking appliance according to claims 15 and 18, **characterized in that** said control panel (11) comprises said fifth means (D), in particular for communicating information and recipes to a user.

22. Cooking appliance according to one of the previous claims, **characterized in that** said heating elements comprise an electric resistance (7,8) and/or an induction element (7,8) and/or an irradiation plate (7,8) and/or a plate for pyroceram tops (23) and/or a gas burner.

23. Cooking appliance according to one of the previous claims, **characterized in that** it comprises sixth means (12;13) for thermal insulation, being associated with said main body (2) and said tub (4) in such a way as to oppose the heat exchange between said distinct areas (4A,4B) of said tub (4).

24. Cooking appliance according to claims 3 or 7 and 23, **characterized in that** said flat bottom (4F) of said tub (4) comprises:
- a plurality of flat elements (14A,14B) adapted to form said distinct areas (4A,4B);
- a hole obtained centrally in said tub (4),
- frames or sealing elements (13) making up said sixth means (12;13) for thermal insulation, being associated with said flat elements (14A,14B) and said hole in such a way as to form a smooth and compact bottom inside said tub (4).

25. Cooking appliance according to the previous claim, **characterized in that** said frames or sealing elements (13) are associated with said flat elements (14A,14B) and said hole so that the same flat bottom (4F) can be disassembled from within said tub (4).

26. Cooking appliance according to claim 3 or 7, **characterized in that** said flat bottom (4F) of said tub (4) comprises a pyroceram sheet (22) with which infrared-ray plates (23) are associated as heating elements of said domino (1).

27. Cooking appliance according to claim 1 or 5 and claims 16 or 17, **characterized in that** it comprises a lid (21) being associated or associable with said tub (4) or said at least one container (5,6;20), comprising seventh means (21P) for conveying cooking fumes and/or vapours into said hood (10).

28. Cooking appliance according to claims 17 and 27, **characterized in that** said seventh means comprise a protrusion (21P) having an exhaust area (21A) for the fumes collected inside said lid (21) directly abutting on said suction grid (10A) of said hood (10).

29. Built-in cooking appliance, comprising a main body (2) being configured and structured in such a way as to be adapted to rest stably on the edges of a recess of a cabinet (3), and comprising:
- a tub (4) which defines, with its capacity, a cooking volume for food to be cooked,
- first heat generating means (7,8,SC;23) being associated with said tub (4) for heating said tub (4),
- second means (SC) being associated with said first means (7,8,SC;23) for controlling the thermal power supplied by said first means (7,8,SC;23) to said tub (4),
**characterized in that** it comprises at least one container (5,6;20) for food to be cooked, which can be associated with at least one area (4A,4B) of said tub (4).

30. Cooking appliance according to the previous claim, **characterized in that** said at least one container (5,6;20) can be associated with distinct areas (4A,4B) of said tub (4).

31. Cooking appliance according to the previous claim, **characterized in that** said first means comprise a plurality of heating elements (7,8) being associated with said areas (4A,4B) of said tub (4).

32. Cooking appliance according to the previous claim, **characterized in that** said heating elements comprise heating elements (7,8;23) of distinct typologies.

33. Cooking appliance according to claim 29 or 30, **characterized in that** said heating elements (7,8;23) are associated with a bottom (4F), being preferably flat, of said tub (4).

34. Kitchen cabinet comprising a built-in cooking appliance, i.e. a cooking appliance which can be housed inside a recess of the same cabinet, preferably resting on top of the edges of said recess, according to one of the previous claims.
